# EUROPEAN PATENT SPECIFICATION

(11) **EP 2 234 357 B1**
(45) Date of publication and mention of the grant of the patent: **27.07.2016**
(21) Application number: 10002931.3
(22) Date of filing: 19.03.2010
(51) Int. Cl.: H04L 1/00, H04L 25/02, H04H 20/42, H04H 20/57, H04N 21/236, H04N 21/434

(54) **Method for improving the data rate of mobile data and the quality of channel estimation in an ATSC-M/H transport data stream**
Verfahren zur Verbesserung der Übertragungsgeschwindigkeit von Mobilfunkdaten und der Qualität der Kanalschätzung in einem ATSC-M/H-Transportdatenstrom
Procédé d'amélioration du débit de données mobiles et de la qualité d'estimation du canal dans un flux de données de transport ATSC-M/H

(30) Priority: 21.03.2009 US 162275 P; 01.12.2009 US 265572 P
(43) Date of publication of application: 29.09.2010
(73) Proprietor: Rohde & Schwarz GmbH & Co. KG, 81671 München (DE)
(72) Inventor: Zurek-Terhardt, Günther, 15566 Schöneiche (DE); Görig, Torsten, 12572 Berlin (DE); Rusch-Ihwe, Jens, 14772 Brandenburg an der Havel (DE); Hagemeier, Denis, 12555 Berlin (DE); Simon, Mike, Frederic, MD 21701 (US)
(74) Representative: Körfer, Thomas

(56) References cited:
- WO-A1-2008/117981
- ADVANCED TELEVISION SYSTEMS COMMITTEE: "ATSC Mobile DTV Standard, Part 2 - RF/Transmission System Characteristics (A/153 Part 2.2009)", INTERNET CITATION, 15 October 2009 (2009-10-15), pages 1-94, XP002571574, Retrieved from the Internet: URL:http://www.atsc.org/cms/index.php/stan dards/published-standards/163-a153-atsc-mo bile-dtv-standard-parts-1-8 [retrieved on 2010-03-05]

## Description

The invention generally relates to communication systems, and more particularly to improving the data rate of mobile data and the quality for channel estimation in an ATSC-M/H transport data stream. With respect to ATSC transport data stream reference is made to US 2006/0200853 A1 and US 2006/0244865 A1. Additionally, WO 2008/117981 A1 discloses insertion of a known data sequence into a digital TV signal.

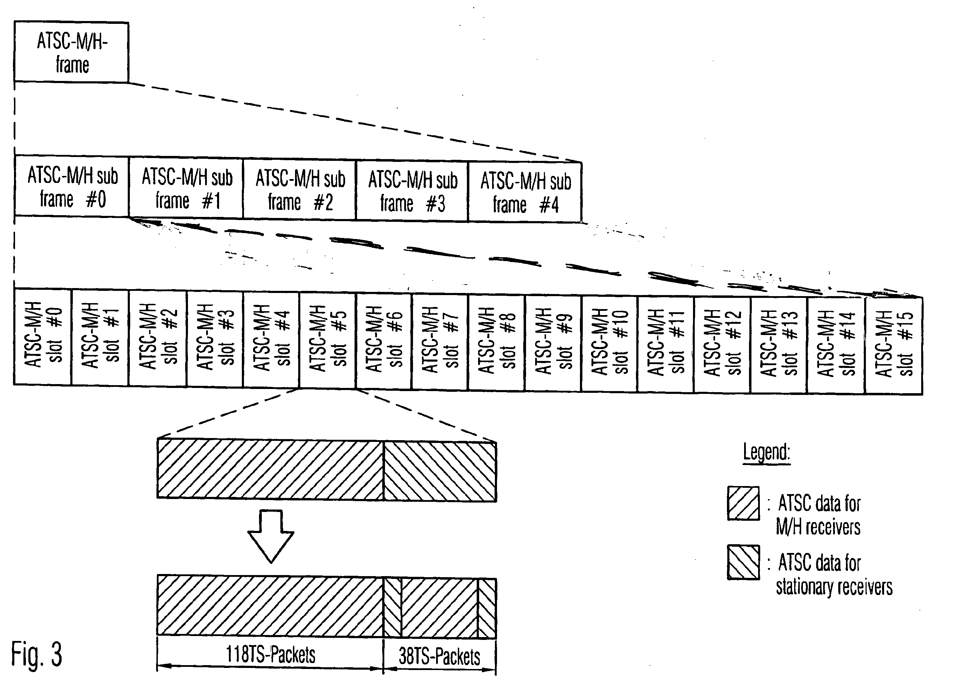

In an ATSC-M/H transport data stream transport data packets containing data for stationary receivers and transport data packets containing data for mobile receivers are transmitted. According to Fig. 3 the data structure of an ATSC-M/H transport data stream is organized in ATSC data frames each comprising 5 ATSC sub data frames, whereas each ATSC sub data frame is subdivided into 16 ATSC slots with each 156 transport data packets. An ATSC slot can be filled in total, i.e. in each 156 transport data packets of the ATSC slot, with data for stationary receivers or can be filled in 118 transport data packets of the ATSC slot with data for mobile receivers and in 38 transport data packets of the ATSC slot with data for stationary receivers. The 118 transport data packets containing data for mobile receivers are called an M/H group. A collection of M/H groups is an M/H parade, which can carry one or two M/H ensemble, whereas an M/H ensemble represents a logical pipe for IP based datagrams of one TV program or one TV service.

The M/H ensembles resp. the M/H parades comprising a specific number of ATSC slots in an ATSC sub data frame or in an ATSC data frame in the ATSC-M/H transport data stream are each leased to a TV carrier from the broadcaster. The TV carrier is not restricted in the use of the leased bandwidth in the ATSC-M/H transport data stream. He is not requested to transmit a specific minimum rate of TV data for stationary receivers. Nevertheless, a TV carrier intending to transmit only data for mobile receivers is limited by the requirements of the ATSC-M/H standard concerning the above mentioned data structure of the ATSC-M/H transport data stream. If each ATSC slot of the leased M/H ensemble containing only data for stationary receivers is substituted by an ATSC slot containing a combination of 118 transport data packets for mobile receivers and 38 transport data packets for stationary receivers, only 75 % of the total leased bandwidth can be used for the transmission of data for mobile receivers.

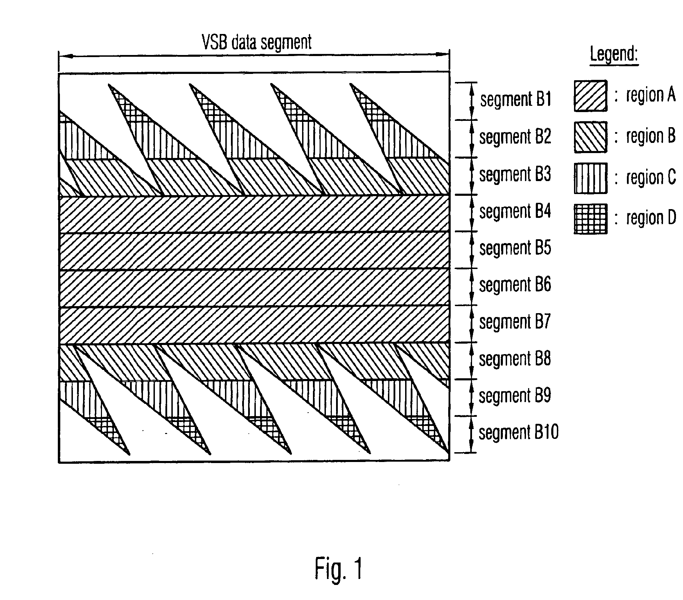

An ATSC slot of a coded ATSC-M/H transport data structure is organized according to Fig. 1 in regions typed A, B, C and D, whereby each region comprises one or more segments. Another disadvantage in an ATSC-M/H transmission leading to a reduced transmission quality is resulted by the fact, that only in segments of region typed A in the coded ATSC transport data stream training sequences for a channel estimation and for a subsequent signal equalization are introduced, whereas the segments of regions typed B, C and D positioned at the border of two successive ATSC slots miss such training sequences. Thus in a time varying transmission channel the channel estimation, the signal equalization and the subsequent decoding is downgraded in time periods corresponding to the occurrence of segments of region typed B, C and D in the ATSC-M/H transmission data stream.

Thus, what is needed is a method for improving the data rate of mobile data and the quality of channel estimation in an ATSC-M/H transport data stream.

The present invention meets the above-identified needs by using the e.g. 38 transport data packets, preferably a part of the e.g. 38 transport data packets, of a slot, especially an ATSC slot originally determined for the transmission of data to stationary receivers for the transmission of data for mobile receivers. Thus the rate of transmitted data for mobile receivers in the ATSC-M/H transport data stream is increased, ideally to a transmission rate near to 100 %. The transport data packets, whose contents are changed from data for stationary receivers to data for mobile receivers are marked for neglecting the respective content in a stationary receiver and for decoding the respective content in a mobile receiver.

Furthermore, training sequences are introduced in segments of data fields in the coded transport data stream, especially the coded ATSC-M/H transport data stream, containing marked transport data packets. Marked transport data packets are positioned in segments of region typed B, C and D of the coded transport data stream, which are originally not arranged with training sequences. Thus all over the coded transport data stream training sequence are distributed for channel estimation and correct signal equalization and correct decoding in each time period of the transmission time.

The data for mobile receivers are inserted symmetrically to the center of the e.g. 38 consecutively transmitted transport data packets originally determined for data for stationary receivers in an ATSC slot and are separated by at least one transport data packet from the consecutively transmitted transport data packets with data for mobile receivers in the actual or in the subsequent ATSC slot. Thus the number of consecutively transmitted transport data packets with data for mobile receivers is limited to e.g. 118 transport data packets preventing a buffer underflow in the buffer model of the ATSC transport data stream.

In a first embodiment of the invention the training sequences are introduced in such parts of the segments, which contain only the e.g. 38 consecutively transmitted transport data packets originally determined for data for stationary receivers. Thus only the e.g. 38 consecutively transmitted transport data packets in an ATSC slot containing a training sequence are decoded in a better manner comparable to the decoding of transport data packets transmitted in a region typed A of the coded ATSC-M/H transport data stream.

In a second embodiment of the invention the training sequences are introduced all over the segments. Thus the transport data packets in the neighborhood of the e.g. 38 successive transport data packets of an ATSC-M/H slot, i.e. the transport data packets in e.g. 118 consecutively transmitted transport data packets of the actual, the preceding or the subsequent ATSC-M/H slot containing data for mobile receivers or the transport data packets in e.g. 156 consecutively transmitted transport data packets of the actual, the preceding or the subsequent ATSC-M/H slot containing only data for stationary receivers, are decoded in a better manner comparable to the decoding of transport data packets transmitted in a region typed A of the coded ATSC-M/H transport data stream.

In one aspect of the invention the marking of transport data packets, whose contents are changed from data for stationary receivers to data for mobile receivers, is performed by a value of the packet identifier (PID) in the header of the transport data packet, which is so far not occupied by the ATSC-M/H standard.

In another aspect of the invention the marking of transport data packets, whose contents are changed from data for stationary receivers to data for mobile receivers, is performed by a transport data packet without any payload data, whose data point to the first and the last marked transport data packet.

In yet another aspect of the invention the marking of transport data packets, whose contents are changed from data for stationary receivers to data for mobile receivers, is performed by values in the multiprotocol encapsulation (MPE) header of a protocol data unit (PDU) comprising several MPEG2 transport data packets, which normally indicate the first and the last MPEG2 transport data packet of the protocol data unit and which can be used for indication of the first and the last marked transport data packet.

In yet another aspect of the invention the marking of transport data packets, whose contents are changed from data for stationary receivers to data for mobile receivers, is performed by the adaptation field in the MPEG2 transport data, which is not reserved for standardized content and which can be used for indication of the first and the last marked transport data packet.

The data for mobile receivers in that transport data packets, which are originally determined for stationary receivers, can be coded with the identical code in case of the transport data packets in an M/H group, i.e. with Reed-Solomon code in combination with a trellis based convolution code, or with a combination of a low-density-parity-check code and a Bose-Chaudhuri-Hocquenghen code leading to a better code quality.

The features and advantages of the present invention will become more apparent from the detailed description set forth below when taken in conjunction with the following drawings. The description should be read as a non-limiting example. In the drawings
- Fig. 1: shows a data structure of a time interval in a coded ATSC-M/H transport data stream as presently used by the applicant,
- Fig. 2: shows a data structure of a time interval in an inventive ATSC-M/H transport data stream,
- Fig. 3: shows a time diagram of an inventive uncoded ATSC-M/H transport data stream and
- Fig. 4: shows a flowchart of an inventive method for improving the data rate of mobile data and the quality of channel estimation in an ATSC-M/H transport data stream.

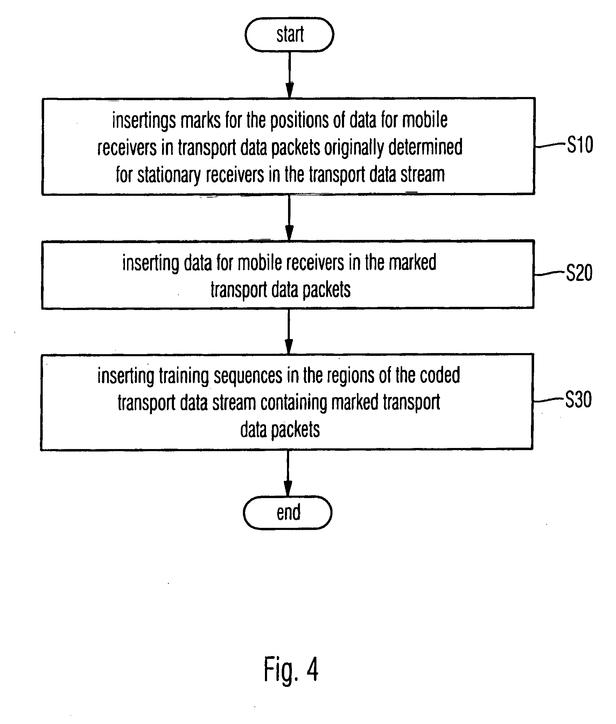

Fig. 4 depicts a flowchart of an exemplary process for improving the data rate of mobile data and the quality for channel estimation in an ATSC-M/H transport data stream.

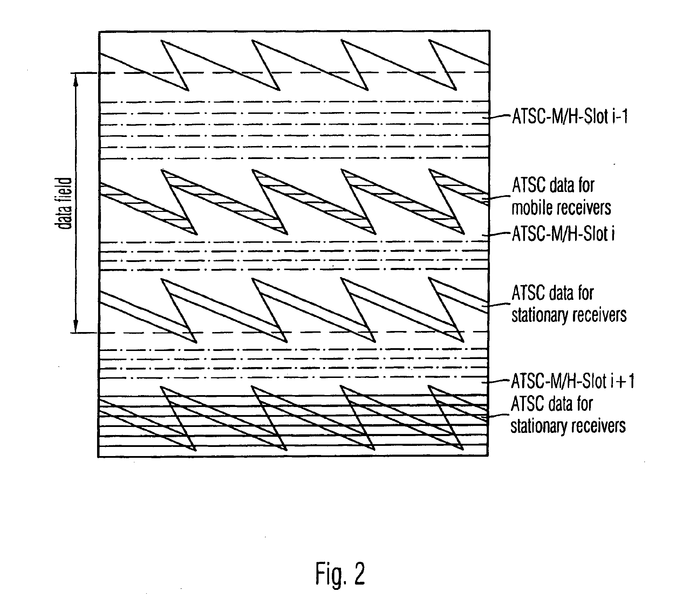

With respect to Fig. 1 and 2, initially in step S10, the consecutively transmitted transport data packets out of for example 38 transport data packets in an ATSC-M/H slot originally determined for data for stationary receivers are marked for inserting data for mobile receivers. Thus more than 118 transport data packets of the respective ATSC-M/H slot are filled with data for mobile receivers in this example. The marked and consecutively transmitted transport data packets of the respective ATSC-M/H slot are positioned symmetrical to the center of the e.g. 38 transport data packets originally determined for data for stationary receivers.

Between the marked transport data packets and the e.g. 118 transport data packets originally determined for data for mobile receivers in the respective and in the subsequent ATSC-M/H slot enough transport data packets with data for stationary receivers have to be positioned in order to fulfill the requirements concerning underflow of the buffer for data for stationary receivers in the buffer model according to ISO/IEC 13818-1. The number of transport data packets with data for stationary receivers between the e.g. 118 transport data packets originally determined for data for mobile receivers and the marked transport data packets depends on the data rate of the ATSC-M/H transport data stream at the output of the ATSC-M/H multiplexer and MPEG-2 buffer size in the buffer model. Furthermore, the transport data packets filled with data for stationary receivers between the transport data packets filled with data for mobile receivers can be used for transmitting a TV program with little content or a forecast channel.

In a first embodiment of the invention the marking of the transport data packets is achieved by a specific value of the packet identifier (PID) in the header of the respective marked transport data packet. This specific value of the packet identifier for marking the respective transport data packet is not yet reserved for other applications in the ATSC-M/H or MPEG2 standard.

In a second embodiment of the invention one transport data packet of the e.g. 38 transport data packets originally determined for data for stationary receivers, which does not include any payload data, is used for marking the transport data packets. Instead of payload data this transport data packet contains a pointer to the first and to the last marked transport data packet determined for data for mobile receivers in the respective ATSC-M/H-slot.

In a third embodiment of the invention the transport data packets provided for data for mobile receivers from the e.g. 38 transport data packets originally determined for data for stationary receivers and representing each a MPEG2 transport data packet are combined to a protocol data unit (PDU) in a multi-protocol encapsulation method (MPE) in the transport layer. Furthermore, each protocol data unit contains a multi-protocol encapsulation header with a pointer, especially a specific value, to the first and the last MPEG2 transport data packet of the protocol data unit. Thus in the transport layer it is possible to use these two pointers in the multi-protocol encapsulation header of a packet data unit comprising the marked transport data packets for marking.

In a fourth embodiment of the invention the adaptation field in a MPEG2 transport data packet is used for marking a transport data packet originally determined for data for stationary receivers as a transport data packet for data for mobile receivers. If the adaptation field flag in the header of an MPEG2 transport data packet is set, the adaptation field is valid and can be used for transmitting any data. Thus by setting the adaptation field flag in the header of the MPEG2 transport data packet the adaptation field of MPEG2 transport data packet can be used for inserting mark data marking the transport data packet as container for data for mobile receivers.

In step S20 the supplementary data for mobile receivers are inserted in the marked transport data packets of the respective ATSC slot according to the last line of Fig. 3.

In the post-processor of the ATSC-M/H transmitter the data for mobile receivers inserted in the marked transport data packets are coded by means of the identical code as for coding the data for mobile receivers in the 118 consecutively transmitted transport data packets of each M/H group, i.e. Reed-Solomon-block-code in combination with a Series-Concatenated-Convolutional-Code (SCCC) or with a Parallel-Concatenated-Convolutional-Code (PCCC). For better error correction the data for mobile receivers inserted in the marked transport data packets are coded in a more robust and reliable code, for example by means of a low-density-parity-check-code (LDPC-code) combined with a Bose-Chaudhuri-Hocquenghen-code (BCH-code).

The data for mobile receivers inserted in the marked transport data packets can only be decoded by ATSC-M/H receivers qualified for recognizing the marking of transport data packets containing supplementary data for mobile receivers.

In step S30 training sequences are inserted in the segments of regions typed B, C and D, which are near the border of the ATSC-M/H slots in the coded ATSC-M/H transport data stream.

In a fifth embodiment of the invention the training sequences are only inserted in parts of the segments, which corresponds to the e.g. 38 transport data packets originally determined for data for stationary receivers, as can be seen in the lines indicating training sequences and positioned only in the trapezoid areas of the coded ATSC-M/H transport data stream in the above part of the diagram in Fig. 2.

In a sixth embodiment of the invention the training sequences are inserted all over the segments belonging to regions typed B, C and D (see the below part of the diagram in Fig. 2). Thus the training sequences are inserted in ranges of the coded ATSC-M/H transport data stream belonging to the 38 transport data packets originally determined for data for stationary receivers of the respective ATSC-M/H slot and to the transport data packets of the respective preceding ATSC-M/H slot and/or of the respective subsequent ATSC-M/H slot.

In one sub-embodiment of the invention the training sequences can be inserted at both borders of the respective ATSC-M/H slot in the segments of regions typed B, C and D. In another sub-embodiment of the invention the training sequences can only be inserted at one border of the respective ATSC-M/H slot in the segments of regions typed B, C and D, i.e. at the border to the respective preceding ATSC-M/H slot or at the border to the respective subsequent ATSC-M/H slot.

The training sequences are inserted in the ATSC-M/H transport data stream by means of the post processor in a method step between the interleaving and the 8-VSB-Trellis-encoding according to the ATSC-M/H standard. The training sequences are preceded by e.g. 12 bytes for setup the 8-VSB-trellis-encoder to a specific state, in which the 8-VSB-trellis-encoder encodes the training sequences in a code being specific for training sequences and being different from the code for payload data. Thus in the fifth embodiment of the invention the bytes in the training sequences being available for channel estimation are reduced in comparison to the bytes in the training sequences in the sixth embodiment of the invention or the bytes in the training sequences positioned in the segments of region typed A.

The training sequences can only be decoded from ATSC-M/H receivers qualified for recognizing the training sequences positioned in the segments of regions typed B, C and D. Optionally the training sequences can also be decoded from specifically developed ATSC receivers qualified for recognizing the training sequences positioned in the segments of regions typed B, C and D.

The scope of the invention is not limited by the features of the embodiments described above. Other and especially future digital TV transmission standards combining the transmission of data for stationary and mobile receivers, which are not described in this patent application, are inside the scope of the present invention.

Software embodiments of the present invention may be provided as a computer program product, or software, that may include an article of manufacture on a machine accessible or machine readable medium having instructions. The instructions on the machine accessible or machine readable medium may be used to program a computer system or other electronic device. The machine-readable medium may include, but is not limited to floppy diskettes, optical disks, CD-ROMs and magneto-optical disks or other types of media/machine-readable medium suitable for storing or transmitting electronic instructions.

The techniques described herein are not limited to any particular software configuration. They may find applicability in any computing or processing environment. The terms "machine accessible medium" or "machine readable medium" used herein shall include any medium that is capable of storing, recording or transmitting a sequence of instructions for execution by the machine and that cause the machine to perform any one of the methods described herein. Furthermore, it is common in the art to speak of software, in one form or another (e.g. program, procedure, process, application, module, unit, logic and so on) as taking an action or causing a result. Such expressions are merely a shorthand way of stating that the execution of the software by a processing system causes the processor to perform an action to produce a result.

While various embodiments of the present invention have been described above, it should be understood that they have been presented by way of example, and not limitation. It will be apparent to persons skilled in the relevant art(s) that various changes in form and detail can be made therein without departing from the scope of the present invention. Thus, the present invention should not be limited by any of the above described exemplary embodiments, but should be defined only in accordance with the following claims.

In addition, it should be understood that the figures illustrated in the attachments, which highlight the functionality and advantages of the present invention, are presented for example purposes only. The architecture of the present invention is sufficiently flexible and configurable, such that it may be utilized (and navigated) in ways other than that shown in the accompanying figures.

## Claims

1. Method for improving the data rate for mobile receivers in an ATSC-M/H transport data stream and for improving the quality of channel estimation in the ATSC-M/H transport data stream comprising:
marking a specified number of N consecutively transmitted transport data packets originally containing data for stationary receivers in a slot of an uncoded ATSC-M/H transport data stream for the transmission of data for mobile receivers ,
inserting data for mobile receivers in the marked transport data packets, coding said data and
introducing training sequences in segments of data fields of the uncoded ATSC-M/H transport data stream containing the marked transport data packets,
wherein, said data for mobile receivers are inserted symmetrically to the center of said N consecutively transmitted transport data packets and are separated from M transport data packets of the actual or a subsequent slot containing each data for mobile receivers by at least one transport data packet.

2. The method according to claim 1,
wherein said training sequences are introduced only in said parts of the segments containing N consecutively transmitted transport data packets in said slot originally containing data for stationary receivers with at least one marked transport data packet.

3. The method according to claim 1,
wherein said training sequences are introduced in said parts of the segments containing N consecutively transmitted transport data packets in said slot originally containing data for stationary receivers with at least one marked transport data packet and in said parts of the segments belonging to a preceding or a subsequent slot.

4. The method according to any of claims 1 to 3,
wherein said marking of said transport data packets containing data for mobile receivers is performed in the adaptation field in the header of said transport data packets.

5. The method according to any of claims 1 to 4,
wherein said marking of said transport data packets containing data for mobile receivers is performed by a value of the packet identification PID in the header of said transport data packets being not occupied by the ATSC standard.

6. The method according to any of claims 1 to 4,
wherein said marking of said transport data packets containing data for mobile receivers is performed by a transport data packet of said N consecutively transmitted transport data packets, which does not include any payload data.

7. The method according to any of claims 1 to 4,
wherein said marking of said transport data packets containing data for mobile receivers is performed by a pointer in the header of a protocol data unit produced by a multi-protocol encapsulation method.

8. The method according to any of claims 1 to 7,
wherein said data for mobile receivers inserted in said marked transport data packets are coded by the identical code for coding said data in said M transport data packets of a slot containing data for mobile receivers.

9. The method according to any of claims 1 to 8,
wherein said data for mobile receivers inserted in said marked transport data packets are coded by means of a code.

10. The method according to claim 9,
wherein the code is a low-density-parity-check-code in combination with a Bose-Chaudhuri-Hocquenghen-code.

11. The method according to any of claims 1 to 10,
wherein N equals 38.

12. The method according to any of claims 1 to 11,
wherein M equals 118.

## Patentansprüche

1. Verfahren zur Verbesserung der Datenrate für mobile Empfänger in einem ATSC-M/H-Transport-Datenstrom und zur Verbesserung der Qualität einer Kanalabschätzung in dem ATSC-M/H-Transport-Datenstrom, umfassend:
Markieren einer festgelegten Anzahl von N aufeinanderfolgend übertragenen Transport-Datenpaketen, die ursprünglich Daten für stationäre Empfänger enthalten, in einem Schlitz eines uncodierten ATSC-M/H-Transport-Datenstroms für die Übertragung von Daten für mobile Empfänger,
Einfügen von Daten für mobile Empfänger in die markierten Transport-Datenpakete, Codieren der Daten und Einführen von Trainingsfolgen in Segmente von Datenfeldern des uncodierten ATSC-M/H Transport-Datenstroms, enthaltend die markierten Transport-Datenpakete,
wobei die Daten für mobile Empfänger symmetrisch zur Mitte der N aufeinanderfolgend übertragenen Transport-Datenpakete eingefügt werden und von M Transport-Datenpaketen des gegenwärtigen oder eines nachfolgenden, jeweils Daten für mobile Empfänger enthaltenden Schlitzes um zumindest ein Transport-Datenpaket getrennt sind.

2. Verfahren nach Anspruch 1, wobei die Trainingsfolgen lediglich in die Teile der Segmente, welche N aufeinanderfolgend übertragene Transport-Datenpakete enthalten, in dem ursprünglich Daten für stationäre Empfänger enthaltenden Schlitz mit zumindest einem markierten Transport-Datenpaket eingefügt werden.

3. Verfahren nach Anspruch 1, wobei die Trainingsfolgen in die Teile der Segmente, die N aufeinanderfolgend übertragene Transport-Datenpakete enthalten, in dem ursprünglich Daten für stationäre Empfänger enthaltenden Schlitz mit zumindest einem markierten Transport-Datenpaket und in die Teile der Segmente eingeführt werden, die zu einem vorhergehenden oder einem nachfolgenden Schlitz gehören.

4. Verfahren nach einem der Ansprüche 1 bis 3, wobei das Markieren der Transport-Datenpakete, die Daten für mobile Empfänger enthalten, in dem Anpassungsfeld im Header der Transport-Datenpakete ausgeführt wird.

5. Verfahren nach einem der Ansprüche 1 bis 4, wobei die Markierung der Transport-Datenpakete, die Daten für mobile Empfänger enthalten, durch einen Wert der Paket-Identifikations-PID in dem Header der Transport-Datenpakete ausgeführt wird, die nicht von dem ATSC-Standard belegt sind.

6. Verfahren nach einem der Ansprüche 1 bis 4, wobei die Markierung der Transport-Datenpakete, die Daten für mobile Empfänger enthalten, durch ein Transport-Datenpaket der N aufeinanderfolgend übertragenen Transport-Datenpakete ausgeführt wird, welches nicht irgendwelche Nutzlastdaten enthält.

7. Verfahren nach einem der Ansprüche 1 bis 4, wobei die Markierung der Transport-Datenpakete, die Daten für mobile Empfänger enthalten, durch einen Zeiger in dem Header einer Protokoll-Dateneinheit ausgeführt wird, die durch ein Multi-Protokoll-Kapselungsverfahren erzeugt wird.

8. Verfahren nach einem der Ansprüche 1 bis 7, wobei die Daten für mobile Empfänger, die in die markierten Transport-Datenpakete eingefügt werden, durch den identischen Code zur Codierung der Daten in den Transport-Datenpaketen eines Schlitzes codiert werden, der Daten für mobile Empfänger enthält.

9. Verfahren nach einem der Ansprüche 1 bis 8, wobei die Daten für mobile Empfänger, die in die markierten Transport-Datenpakete eingefügt werden, mittels eines Codes codiert werden.

10. Verfahren nach Anspruch 9, wobei der Code ein Paritätskontrollcode niedriger Dichte in Kombination mit einem Bose-Chaudhuri-Hocquenghen-Code ist.

11. Verfahren nach einem der Ansprüche 1 bis 10, wobei N gleich 38 ist.

12. Verfahren nach einem der Ansprüche 1 bis 11, wobei M gleich 118 ist.

## Revendications

1. Procédé pour améliorer le débit de données pour des récepteurs mobiles dans un flux de données de transport ATSC-M/H et pour améliorer la qualité d'estimation de canal dans le flux de données de transport ATSC-M/H comprenant :
le marquage d'un nombre spécifié de N paquets de données de transport transmis consécutivement contenant à l'origine des données pour des récepteurs fixes dans un créneau d'un flux de données de transport ATSC-M/H non codé pour la transmission de données pour des récepteurs mobiles,
l'insertion de données pour des récepteurs mobiles dans les paquets de données de transport marqués, le codage desdites données ; et
l'introduction de séquences d'apprentissage dans des segments de champs de données du flux de données de transport ATSC-M/H non codé contenant les paquets de données de transport marqués,
dans lequel lesdites données pour des récepteurs mobiles sont insérées symétriquement au centre desdits N paquets de données de transport transmis consécutivement et sont séparées de M paquets de données de transport du créneau actuel ou d'un créneau subséquent contenant chaque donnée pour des récepteurs mobiles par au moins un paquet de données de transport.

2. Procédé selon la revendication 1,
dans lequel lesdites séquences d'apprentissage sont introduites uniquement dans lesdites parties des segments contenant N paquets de données de transport transmis consécutivement dans ledit créneau contenant à l'origine des données pour des récepteurs fixes avec au moins un paquet de données de transport marqué.

3. Procédé selon la revendication 1,
dans lequel lesdites séquences d'apprentissage sont introduites dans lesdites parties des segments contenant N paquets de données de transport transmis consécutivement dans ledit créneau contenant à l'origine des données pour des récepteurs fixes avec au moins un paquet de données de transport marqué et dans lesdites parties des segments appartenant à un créneau précédent ou subséquent.

4. Procédé selon l'une quelconque des revendications 1 à 3,
dans lequel ledit marquage desdits paquets de données de transport contenant des données pour des récepteurs mobiles est effectué dans le champ d'adaptation dans l'en-tête desdits paquets de données de transport.

5. Procédé selon l'une quelconque des revendications 1 à 4,
dans lequel ledit marquage desdits paquets de données de transport contenant des données pour des récepteurs mobiles est effectué par une valeur de l'identification de paquet PID dans l'en-tête desdits paquets de données de transport qui ne sont pas occupés par la norme ATSC.

6. Procédé selon l'une quelconque des revendications 1 à 4,
dans lequel ledit marquage desdits paquets de données de transport contenant des données pour des récepteurs mobiles est effectué par un paquet de données de transport desdits N paquets de données de transport transmis consécutivement, qui n'inclut aucune donnée de charge utile.

7. Procédé selon l'une quelconque des revendications 1 à 4,
dans lequel ledit marquage desdits paquets de données de transport contenant des données pour des récepteurs mobiles est effectué par un pointeur dans l'en-tête d'une unité de données de protocole produite par un procédé d'encapsulation multi-protocole.

8. Procédé selon l'une quelconque des revendications 1 à 7,
dans lequel lesdites données pour des récepteurs mobiles insérées dans lesdits paquets de données de transport marqués sont codées par le code identique pour coder lesdites données dans lesdits M paquets de données de transport d'un créneau contenant des données pour des récepteurs mobiles.

9. Procédé selon l'une quelconque des revendications 1 à 8,
dans lequel lesdites données pour des récepteurs mobiles insérées dans lesdits paquets de données de transport marqués sont codées au moyen d'un code.

10. Procédé selon la revendication 9,
dans lequel le code est un code de contrôle de parité de faible densité en combinaison avec un code Bose-Chaudhuri-Hocquenghen.

11. Procédé selon l'une quelconque des revendications 1 à 10,
dans lequel N est égal à 38.

12. Procédé selon l'une quelconque des revendications 1 à 11,
dans lequel M est égal à 118.
